# FASCICULE DE BREVET EUROPEEN

(11) **EP 1 603 394 B1**
(45) Date de publication et mention de la délivrance du brevet: **29.10.2014**
(21) Numéro de dépôt: 04715924.9
(22) Date de dépôt: 01.03.2004
(51) Int. Cl.: A01N 43/16, A01N 63/02, A01P 21/00

(54) **PROCEDE POUR LA POTENTIALISATION ET LA STIMULATION DES DEFENSES NATURELLES DES PLANTES**
VERFAHREN ZUR POTENZIERUNG UND STIMULATION NATÜRLICHER ABWEHRMECHANISMEN BEI PFLANZEN
METHOD FOR THE POTENTIATION AND STIMULATION OF NATURAL PLANT DEFENCES

(30) Priorité: 14.03.2003 FR 0303172
(43) Date de publication de la demande: 14.12.2005
(73) Titulaire: LABORATOIRES GOËMAR S.A., 35400 Saint-Malo (FR)
(72) Inventeur: CHEVOLOT, Yann, F-29660 Carantec (FR); KLARZYNSKI, Olivier, F-29420 Plouvorn (FR); YVIN, Jean-Claude, F-35400 Saint-Malo (FR); KLOAREG, Bernard, F-29420 Plouenan (FR)
(74) Mandataire: Cabinet Plasseraud
(86) Numéro de dépôt international: PCT/FR2004/000468
(87) Numéro de publication internationale: WO 2004/082380

(56) Documents cités:
- WO-A-01/30161
- DATABASE WPI Section Ch, Week 199517 Derwent Publications Ltd., London, GB; Class C03, AN 1995-126070 XP002246624 & JP 07 048214 A (MITSUI ENG & SHIPBUILDING CO) 21 février 1995 (1995-02-21)
- DATABASE BIOSIS [Online] BIOSCIENCES INFORMATION SERVICE, PHILADELPHIA, PA, US; 1984, EBEL J ET AL: "PHYTO ALEXIN SYNTHESIS IN SOYBEAN GLYCINE-MAX CELLS ELICITOR INDUCTION OF PHENYL ALANINE AMMONIA LYASE AND CHALCONE SYNTHASE MESSENGER RNA AND CORRELATION WITH PHYTO ALEXIN ACCUMULATION" XP002246621 Database accession no. PREV198478094985 & ARCHIVES OF BIOCHEMISTRY AND BIOPHYSICS, vol. 232, no. 1, 1984, pages 240-248, ISSN: 0003-9861
- DATABASE BIOSIS [Online] BIOSCIENCES INFORMATION SERVICE, PHILADELPHIA, PA, US; 1985, FETT W F ET AL: "PURIFICATION AND CHARACTERIZATION OF XANTHOMONAS-CAMPESTRIS PATHOVAR GLYCINES EXOPOLYSACCHARIDE" XP002246622 Database accession no. PREV198681017415 & PLANT SCIENCE (LIMERICK), vol. 40, no. 2, 1985, pages 99-104, ISSN: 0168-9452
- SHIBUYA AND MINAMI: "Oligosaccharide signalling for defence responses in plant" PHYSIOLOGICAL AND MOLECULAR PLANT PATHOLOGY, 2001, pages 223-233, XP002246454
- ESQUERRÉ-TUGAYÉ ET AL.: "Cell wall degrading enzymes, inhibitory proteins, and oligosaccharides participate in the molecular dialogue between plants and pathogens" PLANT PHYSIOL. BIOCHEM., vol. 38, 2000, page 157-163, XP002246453
- MCNEIL ET AL.: "Structure and function of the primary cell walls of plants" ANN. REV. BIOCHEM., vol. 53, 1984, pages 625-663, XP009013388
- DATABASE BIOSIS [Online] BIOSCIENCES INFORMATION SERVICE, PHILADELPHIA, PA, US; 1994, HANAGATA NOBUTAKA ET AL: "Elicitor for red pigment formation in Carthamus tinctorius cultured cells." XP002246623 Database accession no. PREV199497291831 & JOURNAL OF BIOTECHNOLOGY, vol. 34, no. 1, 1994, pages 71-77, ISSN: 0168-1656

## Description

L'invention a pour objet un procédé pour la potentialisation et la stimulation des défenses naturelles des plantes, notamment des monocotylédones et en particulier des céréales dont plus particulièrement le blé et des dicotylédones, notamment de la vigne, du tabac de la pomme de terre et de la tomate.

La stimulation des défenses naturelles des plantes reste un problème des plus actuels et fait toujours l'objet de nombreuses recherches.

On sait que l'incubation de plantes en présence de substances connues sous l'appellation d'éliciteurs, stimule des réactions de défense du type:
- accumulation d'antibiotiques naturels plus connus sous le nom de phytoalexines,
- synthèse de protéines de défense telles que les chitinases ou les glucanases, également connues sous le nom de PRP (Pathogenesis-related proteins),
- durcissement des parois cellulaires par synthèse de lignine ou de protéines de réticulation,
- synthèse de messagers secondaires tels que l'éthylène, le peroxyde d'hydrogène où l'acide salicylique.

Parmi ces éliciteurs, on peut citer notamment les oligopectines; elles élicitent chez diverses plantes agronomiques les susdites réactions de défense; les réponses maximales sont généralement atteintes pour des concentrations de l'ordre de 100 mg/l et elles se maintiennent à un niveau comparable jusqu'à des concentrations de 4 g/l.

A cet égard et à titre d'exemple, la production et l'accumulation des phytoalexines, en l'occurrence d'avenalumin-1 dans l'avoine, ont été obtenues, selon la demande de brevet japonais publiée N° HEI 3-339080 du 20 décembre 1991 de la Société K.K. Fushimi Seiyakusho, par mise en oeuvre sur des morceaux de feuilles d'avoine de solutions aqueuses contenant des oligomères de pectines de DP 6, DP 8, DP 10 ET DP 12 à des concentrations de 100 à 1000 mg/l.

On sait aussi (JP-7 48214) que la combinaison de phytoalexines avec des polysaccharides permet de renforcer la défense des plantes contre les attaques pathogènes.

Dans le cadre de ses recherches visant à enrichir l'arsenal des substances susceptibles d'être utilisées en tant que éliciteurs dans les procédés de stimulation des défenses naturelles des plantes, notamment des monocotylédones et en particulier des céréales dont plus particulièrement le blé etdes dicotylédones, notamment de la vigne, du tabac, de la pomme de terre et de la tomate, la Société Demanderesse a eu le mérite de trouver que les oligomères de xanthane répondaient à ce but.

L'invention décrit l'utilisation des oligomères de xanthane en tant qu'éliciteurs dans les procédés de stimulation des défenses naturelles des plantes, notamment des monocotylédones et en particulier des céréales dont plus particulièrement le blé etdes dicotylédones, notamment de la vigne, du tabac, de la pomme de terre et de la tomate.

Elle a pour objet un procédé pour la stimulation des défenses naturelles des plantes, en particulier des dicotylédones et notamment du tabac et de la tomate, caractérisé par le fait que l'on applique, notamment aux feuilles ou aux semences ou graines, une quantité efficace d'au moins un oligomère de xanthane notamment sous la forme d'une composition et plus particulièrement d'une solution aqueuse dont la concentration en au moins un oligomère de xanthane est de 50 mg/l à 5000 mg/l, de préférence de 50 mg/l à 1000 mg/l, la quantité efficace correspondant à la quantité d'oligomère(s) de xanthane qui est apportée aux plantes à traiter en appliquant la susdite solution aqueuse à raison de 10 g à 1000 g, de préférence de 20 g à 500 g par hectare de culture.

Selon ce premier aspect, l'invention permet donc d'aider la plante en particulier au moment où elle est l'objet d'une agression par un agent pathogène ou au moment où une telle agression semble imminente, en stimulant alors ses défenses naturelles grâce à la mise en oeuvre des oligomères de xanthane, cette stimulation se traduisant notamment par une accumulation, dans ses tissus, en particulier de phytoalexines et des protéines PR (Pathogenesis-related proteins).

Mais fréquemment une telle agression n'est pas à redouter dans l'immédiat.

Et dans ce cas, la stimulation des défenses naturelles de la plante par mise en oeuvre du procédé conforme à l'invention représente pour cette dernière une dépense énergétique non négligeable et inutile tant que l'agression ne se produit pas.

Or, s'il est parfaitement possible de surveiller les cultures en vue de détecter le moment auquel une agression par un agent pathogène risque de se produire, et auquel la mise en oeuvre du procédé conforme à l'invention devient nécessaire, une telle surveillance est fastidieuse et coûteuse.

Et un mérite supplémentaire de la Société Demanderesse est d'avoir trouvé que, selon un deuxième aspect de l'invention, il est possible de gérer cette situation en appliquant à la plante et notamment aux feuilles ou aux semences ou graines, en l'absence de tout agent pathogène, une solution aqueuse d'au moins un oligomère de xanthane dans laquelle la concentration en oligomère de xanthane est inférieure à la limite inférieure du domaine de concentrations applicable dans le cadre du premier aspect de l'invention, la quantité efficace c'est-à-dire la quantité d'au moins un oligomère de xanthane devant être.apportée à la plante étant elle aussi inférieure à la limite inférieure du domaine retenu dans le cadre du premier aspect de l'invention, ce grâce à quoi il ne se produit aucune élicitation notable au moment de la mise en oeuvre du procédé conforme à l'invention alors qu'au moment de l'attaque de la plante par un agent pathogène il se produit de façon totalement inattendue et surprenante une stimulation potentialisée des défenses naturelles de la plante traduisant par là une immunisation de la plante traitée.

Il s'ensuit que l'invention a également pour objet un procédé de stimulation et de potentialisation des défenses naturelles des plantes, notamment des monocotylédones et en particulier des céréales dont plus particulièrement le blé et des dicotylédones, notamment de la vigne, du tabac, de la pomme de terre et de la tomate, caractérisé par le fait qu'on applique, aux feuilles ou aux semences ou graines et avant toute agression par un agent pathogène, une quantité efficace d'au moins un oligomère de xanthane de degré de polymérisation de 1 à 30, notamment sous la forme d'une composition et en particulier d'une solution aqueuse contenant le ou les oligomères de xanthane à une concentration de 0.1 mg/l à 50 mg/l, de préférence de 0.5 mg/l à 20 mg/l, la quantité efficace correspondant à celle qui est apportés aux plantes à traiter en appliquant la susdite composition à raison de 50 1 à 1000 1 de préférence de 200 1 à 500 1 par hectare de culture.

La Société Demanderesse a en effet pu constater que, lorsque, selon le deuxième aspect de l'invention, les oligomères de xanthane sont utilisés sous la forme de solutions aqueuses dans lesquelles elles sont présentes à des concentrations situées dans le domaine étroit de 0.1 à 50 mg/l, elles exercent sur les plantes traitées un effet potentialisateur des défenses naturelles qui n'est déclenché qu'à partir du moment où l'attaque d'un agent pathogène se produit effectivement.

L'avantage de ce deuxième aspect de l'invention est que le métabolisme de la plante n'est pas dévié vers la mise en place des réactions de défense à un moment où cette mise en place est inutile; par contre, ce métabolisme est mis en alerte et lorsque la plante est l'objet d'une agression, elle mobilise ses défenses naturelles, et cela beaucoup plus intensément qu'en l'absence du traitement conforme au procédé selon l'invention.

Les oligomères de xanthane mis en oeuvre conformément à l'invention présentent un degré de polymérisation de préférence de 1 (5 unités saccharidique) à 30 (150 unités saccharidiques).

Les compositions et en particulier les solutions aqueuses appliquées aux plantes traitées dans le cadre des procédés conformes au premier et au deuxième aspect de l'invention, peuvent ne contenir qu'un seul oligomère de xanthane de degré de polymérisation de 1 à 30 ou un mélange de plusieurs de ces oligomères.

Ces oligomères de xanthane sont le résultat de la dégradation, notamment par voie enzymatique du xanthane, qui est un exo- ou heteropolysaccharide extrait des bactéries du genre Xanthomonas.

Le xanthane est utilisé dans l'industrie agroalimentaire notamment en tant qu' agent texturant, stabilisant/émulsifiant ou dispersant.

Il répond à la formule générale 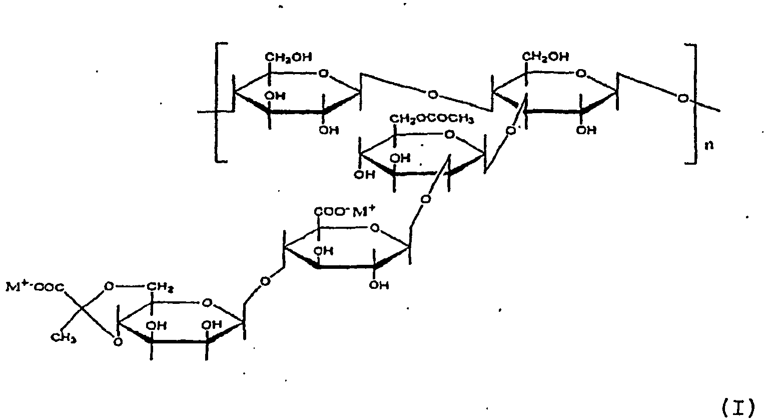 dans laquelle
- n est un nombre entier,
- M⁺ représente les ions Na, K ou1/2Ca.

Le poids moléculaire du xanthane est de 2.10⁶ à 20.10⁶ Da

Il est essentiellement constitué par une chaîne d'unités glucose liées les unes aux autres en β-1,4 une unité glucose sur environ deux portant une chaîne latérale trisaccharidique.

La chaîne latérale trisaccharidique est liée au carbone 3 du glucose de la chaîne principale ; elle est constituée de α-D-mannose- (1, 4)- acide β-D- glucuronique acid-(1,2)-β-D-mannose.

La première unité mannose de la chaîne latérale peut être substituée par un acétate en position 6 et l'unité mannose terminale par un pyruvate en positions 4 et 6.

Les taux d'acétylation et de pyruvatation ainsi que le taux de branchements dépendent de la souche de départ et des conditions de culture.

Le comportement en solution du xanthane est fonction de son degré d'organisation. Ce comportement est en outre fonction de la concentration en polymères, de la force ionique de la solution et de la température de dissolution et lorsque le xanthane est dissous sous sa forme désordonnée, c'est à dire dissous à chaud et sans sels, il peut être hydrolysé par des cellulases (Rinaudo et al, Int. J. Biol. Macromol. 1980 ; F. Garcia Ochoa et al, Biotechnology advances, 2000).

Dans la pratique, la Société Demanderesse a effectivement procédé à une hydrolyse enzymatique d'une solution de xanthane désordonné.

Le xanthane de départ peut être celui commercialisé par la Société Degussa et obtenu à partir de Xanthomonas Campestris par dialyse contre l'eau déionisée (Satiaxane CX90, lot 2001 4317).

Les enzymes utilisées peuvent être des cellulases, par exemple
- celle commercialisée sous la marque Celluclast cette enzyme étant mise en oeuvre après dessalage du xanthane sur biogel P2 (YCII 31)
- celle commercialisée sous l'appellation Worthington 2609/50k4255, également mise en oeuvre après dessalage du xanthane par ultrafiltration à 10000 Da sur une membrane EPS (YCII 39)

La dégradation enzymatique a été réalisée au bain-marie à 55 °C.

500 mg de xanthane dessalé sont dissous à chaud, c'est-à-dire à une température supérieure à 80 °C dans 500 ml d'eau déionisée.

Le pH mesuré est de 4,7.

La solution est amenée à 55°C, puis on ajoute 300 µl de Celluclast.

Après deux heures, aucune hydrolyse significative n'étant observée par chromatographie d'exclusion de taille (effectuée sur gel Superdex 30), on ajoute alors 2 ml de cellulase Worthingthon et on poursuit l'hydrolyse pendant 24 heures 55 °C.

La solution est alors filtrée sur membrane 10000 Da (Polyether sulphone, pression 40 psi).

Le rétentat est diafiltré avec 90 ml d'eau déionisée et les deux filtrats sont réunis.

Poids du filtrat total : 220 mg, ce qui correspond à un rendement de 44 %.

Poids du rétentat : 118 mg.

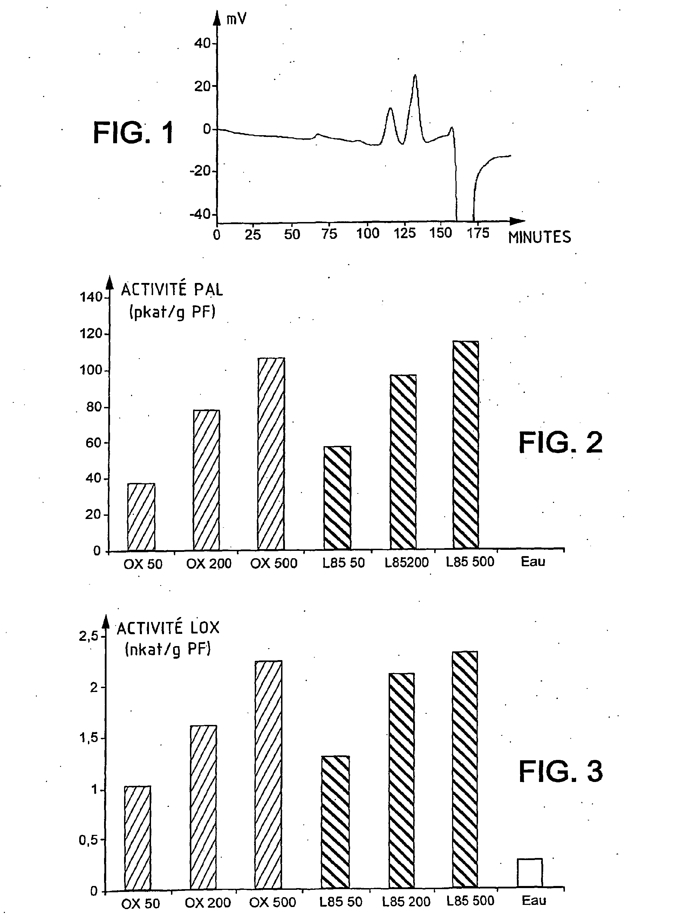

L'hydrolysat ainsi obtenu, autrement dit le filtrat dont il vient d'être question, a été examiné par chromatographie par exclusion de taille (en anglais :"size exlusion chromatography") ce qui a donné le spectre de la figure 1 qui montre la variation du potentiel exprimé en mV (détecteur à indice de réfraction) en fonction du temps exprimé en minutes.

Le spectre en question comporte, comme visible deux pics principaux à 115 et 132 minutes qui pourraient correspondre respectivement au décasaccharide (dimère) et au pentasaccharide (monomère).

L'examen du filtrat par chromatographie liquide à haute performance (HPLC) fait apparaître une structure fine plus complexe montrant de nombreux pics certainement reliés à des taux de pyruvatation et/ou d'acétylation différents.

Enfin, l'analyse de la structure par RMN confirme la présence de pyruvate et d'acétate.Après hydrolyse totale, le pourcentage massique d'oses neutres dans les oligomères (50%) ainsi que le fait que les profils HPLC des hydrolysats totaux sont similaires à ceux du polymère de départ, confirme que l'on est en présence de produits de même nature chimique (mais de degrés de polymérisation différents).

Au vu de ces différents examens, l'hydrolysat de xanthane ainsi obtenu, désigné par HX est un mélange d'oligomères de xanthane pouvant être représenté par la figure 1 dans laquelle n est inférieur à 30, notamment à 10.

C'est cet hydrolysat, autrement dit le mélange d'oligomères composant le filtrat qui, dans un premier temps a été étudié du point de vue de son influence éventuelle sur les mécanismes de défenses naturelles des plantes.

Il a été mis en oeuvre sous la forme de solutions aqueuses à différentes concentrations en hydrolysat.

A titre de comparaison on a traité les cellules végétales provenant des mêmes plantes dans les mêmes conditions, d'une part avec des solutions aqueuses comportant aux mêmes concentrations un éliciteur bien connu, à savoir la laminarine et, d'autre part, avec un témoin inactif, à savoir l'eau.

La laminarine testée à titre de comparaison est un β 1-3 glucane de degrés de polymérisation de 25 à 30 extrait d'algues brunes.

Plus particulièrement, on a étudié l'effet éliciteur direct de l'hydrolysat en question en appliquant à des cultures de cellules ou suspensions cellulaires de tabac BY et de tomates de la variété MSK8, des solutions aqueuses à concentrations croissantes en hydrolysat HX, puis en laminarine, ces concentrations étant respectivements égales à 50 mg/l, 200 mg/l et 500 mg/l.

Pour chaque concentration, tant de l'hydrolysat utilisé conformément à l'invention que de la laminarine, on a testé deux marqueurs des réactions de défenses, à savoir:
- l'activité phénylalanine ammonia lyase (PAL), qui est une enzyme clé pour la génération de l'acide salicylique c'est à dire d'un élément de la cascade de signalisation aboutissant à l'activation des gènes de défenses et pour la synthèse des phytoalexines chez les plantes et
- l'activité lipoxygénase (LOX), qui est une enzyme impliquée dans la génération du jasmonate de méthyle, c'est-à-dire d'un élément de la cascade de signalisation aboutissant à l'activité des gènes de défense.

Les trois solutions étudiées à base de l'hydrolysat HX utilisé conformément à l'invention sont désignées par
- OX₅₀ : solution contenant 50 mg d' hydrolysat par litre,
- OX₂₀₀ : solution contenant 200 mg d'hydrolysat par litre,
- OX₅₀₀ : solution contenant 500 mg d'hydrolysat par litre,
OX étant l'abréviation retenue pour désigner l'hydrolysat HX.

Les trois solutions aqueuses de comparaison à base de laminarine sont désignées par
- L85₅₀ : solution contenant 50 mg de laminarine par litre,
- L85₂₀₀ : solution contenant 200 mg de laminarine par litre,
- L85₅₀₀ : solution contenant 500 mg de laminarine par litre,

L'activité PAL est mesurée 6 heures après le début du traitement et l'activité LOX 18 heures après le début du traitement d'une part avec les solutions d'hydrolysat, d'autre part encore avec les solutions de laminarine et avec l'eau, les activités PAL et LOX apparues et exprimées respectivement en picokatal par gramme de poids frais (pkat/g PF) dans le cas de l'activité PAL et en nanokatal par gramme de poids frais (nkat/g PF) dans le cas de l'activité LOX.

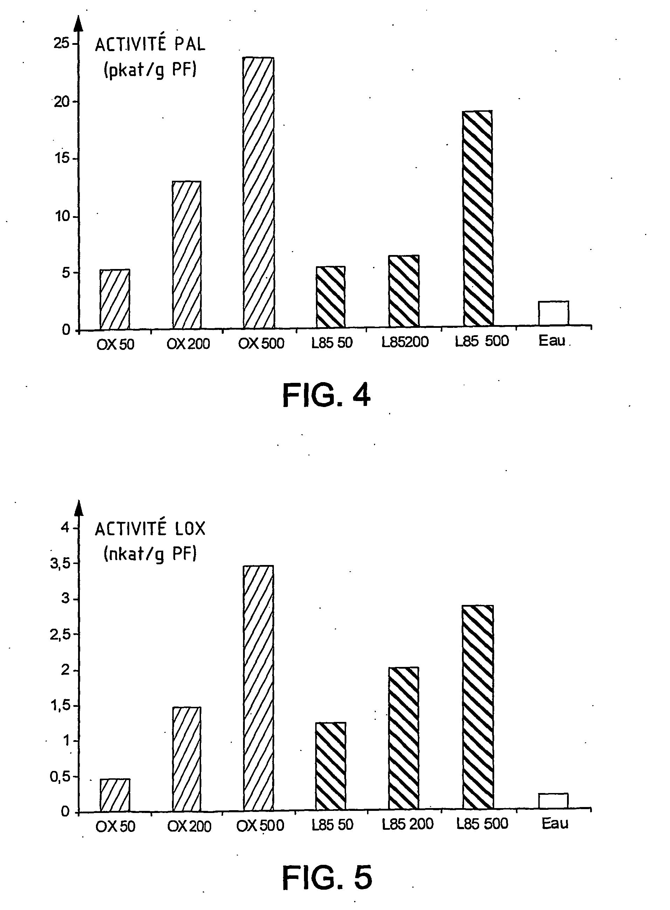

Ces résultats sont réunis sur les diagrammes
- de la figure 2 pour autant qu'il s'agit du dosage de l'activité PAL dans le cas du tabac,
- de la figure 3 pour autant qu'il s'agit du dosage de l'activité LOX dans le cas du tabac,
- de la figure 4 pour autant qu'il s'agit du dosage de l'activité PAL dans le cas de la tomate,
- de la figure 5 pour autant qu'il s'agit du dosage de l'activité LOX dans le cas de la tomate,

L'examen des diagrammes des figures 2 à 5 montre
- que dans le cas du tabac, la stimulation de l'activité PAL est globalement similaire pour l'hydrolysat HX mis en oeuvre conformément à l'invention et pour la laminarine, les stimulations de l'activité LOX étant également très proches l'une de l'autre pour les deux produits,
- que dans le cas de la tomate, l'Hydrolysat HX utilisé conformément à l'invention se montre légèrement plus efficace que la laminarine dans le cas de la stimulation de l'activité PAL alors que dans le cas de la stimulation de l'activité LOX les deux produits sont très proches l'un de l'autre.

Il est donc possible de conclure que les oligomères de xanthane utilisés conformément à l'invention sont des éliciteurs efficaces des activités PAL. et LOX chez les plantes, notamment dans le cas des dicotylédones et plus particulièrement dans le cas du tabac et de la tomate.

Dans la pratique, on traite les plantes dont il s'agit de stimuler les défenses naturelles soit lors d'une attaque par un agent pathogène soit en vue d'une attaque future, à l'aide d'une composition, notamment d'une solution aqueuse qui doit être appliquée sur les feuilles ou sur les semences et qui comprend, outre les véhicules et constituants classiques de ce genre de composition, un ou plusieurs oligomères de xanthane tels que définis plus haut, présents aux concentrations également indiquées plus haut et qui dépendent du résultat recherché, c'est à dire une stimulation immédiate ou une potentialisation des défenses.

Le traitement est généralement réalisé à partir des premiers stades végétatifs de la plante éventuellement en plusieurs applications successives avantageusement par pulvérisation.

Le moment précis de la ou des applications sera choisi notamment en fonction de la plante traitée.

Le véhicule ou vecteur est généralement l'eau.

Il est toutefois possible d'avoir recours, en lieu et place de l'eau, à un vecteur choisi dans le groupe comprenant les huiles minérales, les huiles végétales, tous corps gras liquides et les alcools dont notamment le propylèneglycol ou le glycérol.

Les constituants classiques essentiels des susdites compositions peuvent varier selon la nature des la plante traitée; ils sont généralement choisis dans le groupe comprenant des solvants, des agents tensio-actifs, des agents dispersants et/ou des charges solides.

A titre d'exemples non limitatifs, on donne ci-après les constituants d'un concentré liquide et d'une poudre concentrée soluble à base des oligomères de xanthane mis en oeuvre conformément à l'invention.

### 1. Concentré liquide pour l'agriculture à base d'oligomères de xanthane :

| | |
|---|---|
| mélange d'oligomères de xanthane HX | 0.1 kg |
| Tween 80 | 0.2 kg |
| Méthylparaben sodé | 0.001 kg |
| Eau | qsp 1 kg |
| Total | 1,000 kg |

Ce concentré liquide est utilisé après dilution d'une quantité comprise de préférence entre 500 et 50000 g, de préférence entre 500 à 10000 g, dans 1000 litres d'eau.

Cette dilution fournit une composition présentant une teneur en oligomères de xanthane HX comprise entre 50 et 5000 g, de préférence entre 50 et 1000 g, pour 1000 litres d'eau.

### 2. Poudre concentrée soluble contenant l'hydrolysat HX, en tant que matière active

Pour 1 kg en poids/poids, la constitution de cette poudre est comme suit:

| | |
|---|---|
| hydrolysat HX | 0.15 kg |
| Kaolin | 0.5 kg |
| Mannose | 0.05 kg |
| Méthylparaben sodé | 0.005 kg |
| Amidon purifié | 0.295 kg |
| Total | 1,000 kg |

Cette poudre concentrée est utilisée après dilution dans une quantité suffisante d'eau pour obtenir une composition dont la teneur en hydrolysat HX est comprise entre 50 et 5000 g pour 1000 litres d'eau, de préférence entre 50 et 1000 g.

## Revendications

1. Procédé pour la stimulation des défenses naturelles des monocotylédones et des dicotylédones, **caractérisé par le fait que** l'on applique aux feuilles ou aux semences ou graines, une quantité efficace d'au moins un oligomère de xanthane de degré de polymérisation de 1 à 30 sous la forme d'une composition dont la concentration en au moins un oligomère de xanthane est de 50 mg/L à 5000 mg/L, la quantité efficace correspondant à la quantité d'oligomère(s) de xanthane qui est apportée aux monocotylédones et aux dicotylédones à traiter en appliquant la susdite composition à raison de 10 g à 1000 g par hectare de culture.

2. Procédé de stimulation et de potentialisation des défenses naturelles des monocotylédones et des dicotylédones, **caractérisé par le fait qu'**on applique aux feuilles ou aux semences ou graines et avant toute agression par un agent pathogène, une quantité efficace d'au moins un oligomère de xanthane de degré de polymérisation de 1 à 30, sous la forme d'une composition contenant le ou les oligomères de xanthane à une concentration de 0.1 mg/L à 50 mg/L, la quantité efficace correspondant à celle qui est apportée aux monocotylédones et aux dicotylédones à traiter en appliquant la susdite composition à raison de 50L à 1000L par hectare de culture.

3. Procédé selon la revendication **1 ou 2, caractérisé en ce que** la composition est une solution aqueuse.

4. Procédé selon l'une quelconque des revendications **1 à 3, caractérisé en ce que** les monocotylédones sont des céréales et les dicotylédones sont choisies parmi la vigne, le tabac, la pomme de terre et la tomate.

5. Procédé selon l'une quelconque des revendications **1 à 4, caractérisé en ce que** la céréale est le blé.

## Patentansprüche

1. Verfahren zur Stimulation natürlicher Abwehrmechanismen bei einkeimblättrigen und zweikeimblättrigen Pflanzen, **dadurch gekennzeichnet, dass** auf die Blätter oder das Saatgut oder die Samen eine wirksame Menge mindestens eines Oligomers von Xanthan mit einem Polymerisationsgrad von 1 bis 30 in Form einer Zusammensetzung angewendet wird, deren Konzentration an mindestens einem Oligomer von Xanthan 50 mg/l bis 5.000 mg/l ist, wobei die wirksame Menge der Menge des Oligomers/der Oligomere von Xanthan entspricht, die den zu behandelnden einkeimblättrigen und zweikeimblättrigen Pflanzen gegeben wird, indem die Zusammensetzung im Verhältnis von 10 g bis 1.000 g pro Hektar Anbaufläche angewendet wird.

2. Verfahren zur Stimulation und Potenzierung natürlicher Abwehrmechanismen bei einkeimblättrigen und zweikeimblättrigen Pflanzen, **dadurch gekennzeichnet, dass** auf die Blätter oder das Saatgut oder die Samen und zwar vor jeglichem Angriff durch ein Pathogen eine wirksame Menge mindestens eines Oligomers von Xanthan mit einem Polymerisationsgrad von 1 bis 30 in Form einer Zusammensetzung angewendet wird, die das oder die Oligomer(e) von Xanthan in einer Konzentration von 0,1 mg/l bis 50 mg/l enthält, wobei die wirksame Menge der Menge des Oligomers/der Oligomere von Xanthan entspricht, die den zu behandelnden einkeimblättrigen und zweikeimblättrigen Pflanzen gegeben wird, indem die Zusammensetzung im Verhältnis von 50 l bis 1.000 l pro Hektar Anbaufläche angewendet wird.

3. Verfahren nach Anspruch **1 oder 2, dadurch gekennzeichnet, dass** die Zusammensetzung eine wässrige Lösung ist.

4. Verfahren nach einem der Ansprüche **1 bis 3, dadurch gekennzeichnet, dass** die einkeimblättrigen Pflanzen Getreidepflanzen sind und die zweikeimblättrigen Pflanzen ausgewählt sind aus Weinrebe, Tabak, Kartoffel und Tomate.

5. Verfahren nach einem der Ansprüche **1 bis 4, dadurch gekennzeichnet, dass** die Getreidepflanze Weizen ist.

## Claims

1. Method for the stimulation of the natural defenses of monocotyledons and of dicotyledons, **characterized in that** an effective amount of at least one xanthan oligomer having a degree of polymerization of 1 to 30, in the form of a composition whose concentration of at least one xanthan oligomer is from 50 mg/l to 5000 mg/l, is applied to the leaves or to the seeds or grains, the effective amount corresponding to the amount of xanthan oligomer(s) that is provided to the monocotyledons and dicotyledons to be treated by applying the above mentioned composition in a proportion of 10 g to 1000 g per hectare of crop.

2. Method for the stimulation and potentiation of the natural defenses of monocotyledons and of dicotyledons, **characterized in that** an effective amount of at least one xanthan oligomer having a degree of polymerization of preferably 1 to 30, in the form of a composition containing the xanthan oligomer(s) at a concentration of 0.1 mg/l to 50 mg/l, is applied to the leaves or to the seeds or grains and before any attack by a pathogenic agent, the effective amount corresponding to that which is provided to the monocotyledons and dicotyledons to be treated by applying the above mentioned composition in a proportion of 50 1 to 1000 1 per hectare of crop.

3. Method according to Claim **1 or 2, characterized in that** the composition is an aqueous solution.

4. Method according to any one of Claims **1 to 3, characterized in that** the monocotyledons are cereals and the dicotyledons are chosen from vine, tobacco, potato and tomato.

5. Method according to any one of Claims **1 to 4, characterized in that** the cereal is wheat.
